# EUROPEAN PATENT APPLICATION

(11) **EP 3 940 615 A1**
(43) Date of publication of application: **19.01.2022**
(21) Application number: 20186374.3
(22) Date of filing: 17.07.2020
(51) Int. Cl.: G06Q 20/24, G06Q 30/06

(54) **COMPUTER-IMPLEMENTED PROCESS FOR PURCHASING A PRODUCT USING A PAYMENT CARD**

(71) Applicant: Clever & Smart UG (haftungsbeschränkt), 78048 Villingen-Schwenningen (DE)
(72) Inventor: Heinrich, Frank, 78048 Villingen-Schwenningen (DE)
(74) Representative: Meyer zu Bexten, Elmar

(57) **Abstract**

**Problem**

Conventionally, leasing contracts are concluded on a case-by-case basis, which is associated with considerable administrative effort and hitherto has impeded widespread adoption of the leasing model. The invention thus addresses the technical problem of simplifying the formation and administration of leasing contracts.

**Solution**

Computer-implemented process for purchasing (10) a product by a holder (13) of a payment card,
comprising
initiation (1) of a payment of an agreed-upon monetary amount, such as by specification of a number, validity date, and verification number of the card vis-à-vis a merchant (6),
authorization (2) of the payment through an acquiring bank (7) of the merchant (6), and
settlement (3) of the amount, such as by money transfer (16), between the acquiring bank (7) and an issuing bank (8) of the card,
characterized in
disbursal (4) of the amount by a lessor organization (11) such as a leasing bank (5).

## Description

### Technical Field

The invention pertains to the process and products as per the first portion of the independent claims.

### Background Art

In payment processing, card schemes are payment networks linked to payment cards, such as debit or credit cards, of which a bank or any other eligible financial institution can become a member. By becoming a member of the scheme, an organization obtains authorization to issue or acquire cards operating on the network of that card scheme. In a so-called three-party scheme, the issuer (having the relationship with the cardholder) and the acquirer (having the relationship with the merchant) are the same entity, eliminating the need for any charges between the issuer and the acquirer.

An exemplary implementation of such scheme is disclosed in PTL1. NPL1 presents a model of a debit or credit card payment scheme in an attempt to determine the optimal structure of fees between those charged to cardholders and those charged to merchants.

### Summary of invention

The invention as claimed is hereinafter disclosed in such a way that the technical problem with which it deals can be appreciated and the solution can be understood.

### Technical Problem

Conventionally, leasing contracts are concluded on a case-by-case basis, which is associated with considerable administrative effort and hitherto has impeded widespread adoption of the leasing model. In view of this situation, the invention addresses the technical problem of simplifying the formation and administration of leasing contracts.

### Solution to Problem

The problem is solved as per the second portion of the independent claims.

### Advantageous effect of invention

While supporting the basic payment scheme of a credit card, the process of Claim 1 opens up the possibility of leasing - instead of buying - the asset of interest. To this end, the cardholder, having picked an article, may decide instantaneously on either way of purchasing the product at hand.

### Brief description of drawings

Figure 1 is a block schematic.
Figure 2 is a process model.
Figure 3 is a flow sheet.

### Description of embodiments

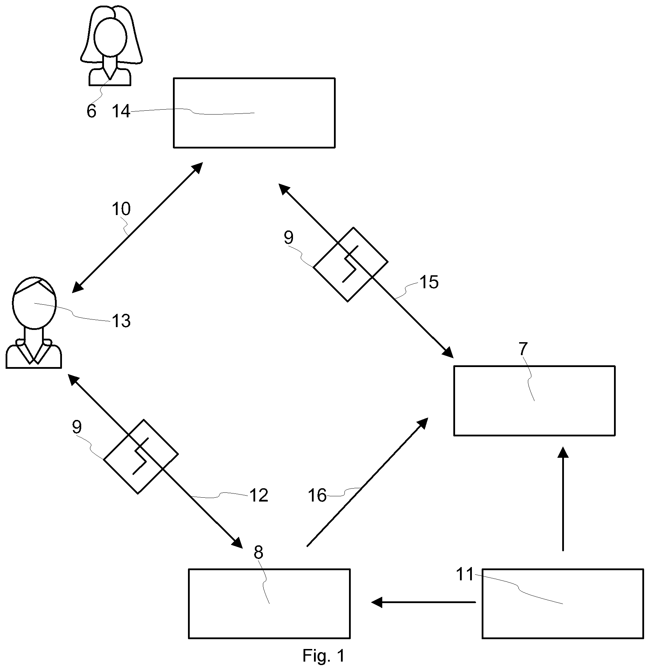

The following description is based on a credit or debit card, use of which invariably entails the involvement of multiple parties as depicted in Figure 1. In addition, users can pay on site without contact or on the basis of a machine-readable code. For example, via an app that they have installed on their smartphone.

As a primary actor, a financial service provider hereinafter referred to as the lessor organization (11) supplies the required payment processing technology. The bank of the cardholder (13) is referred to as the issuing bank (8) or "issuer" as it issues the card (12) after checking the creditworthiness of its envisaged holder (13). Ultimately, the agreed-upon monetary amount is to be transferred (16) to the bank of the merchant (6), hereinafter referred to as the acquiring bank (7) or "acquirer". A payment processor (9) - potentially associated with the leasing organization (11) - operates the advanced security network underlying any purchase (10).

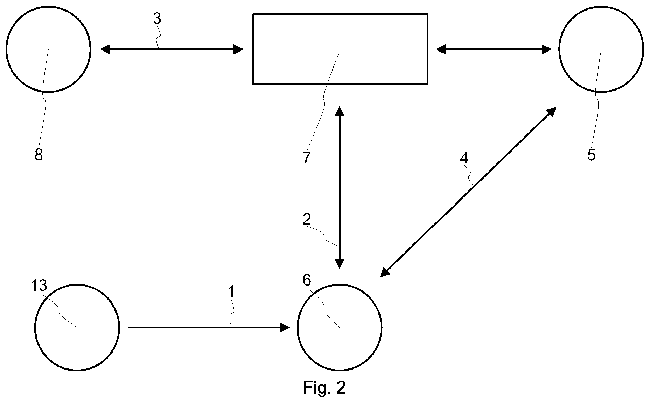

In the process illustrated in Figure 2, the cardholder (13) initiates (1) such purchase (10), causing the merchant (6) to request an electronic credit check and ask for authorization (2) of the transaction by the acquiring bank (7). In response, the acquirer (7) checks the creditworthiness of the cardholder (13) with the issuing bank (8) and, upon successful verification, grants authorization (2). Finally, the amount is settled (3) between the acquiring bank (7) and issuing bank (8) and disbursed (4) by the leasing bank (5) to the merchant (6).

### Example

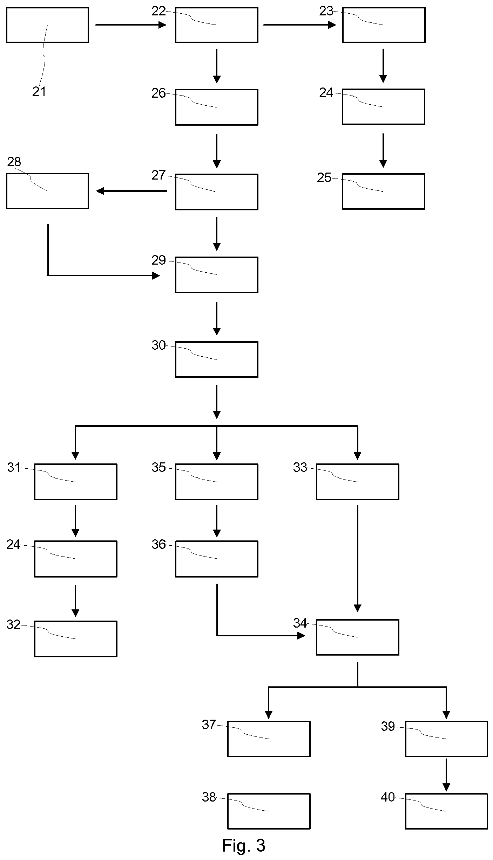

Figure 3 elucidates such process by way of example: Upon initiation (1) of the payment, the lessor organization (11) advises (21) the cardholder (13) of the terms of lease of the product to be purchased and presents him or her with multiple options, for example, regarding the life of the lease. Depending on the options at hand, the cardholder (13) decides upon further action (22).

If, for instance, the cardholder (13) decides to buy or lease the product (23), an e-mail (24) to this effect is transmitted to the issuing bank (8) or lessor organization (11), who then charges the cardholder (13) the full amount or retains leasing instalments (25) for the product, respectively. In the latter case, the lessor organization (11) further enters into an agreement (26) with the cardholder (13) on the date on which he or she is to return (27) the product.

Once the product is returned (27) - by regular mail, express, or handover to the merchant, as the case may be -, it enters into its "second life" as required by the European Commission's "New Circular Economy Action Plan - For a cleaner and more competitive Europe". At this milestone, the product is consigned to a trustee (28) for inspection and, depending on its nature and condition, either repair, refurbishment, or recycling. Such inspection also forms the basis for calculating (29) the redemption value - if any - of the product, which value is then be notified (30) to the cardholder (13). If the latter should decide to buy the product (31), the lessor organization (11) would charge him or her with the notified redemption value.

In case the cardholder (13) disapproves of the notified redemption value (35), an in-house arbitration body of the lessor organization (11) is called upon to reach an agreement (36) between the stakeholder involved. If the cardholder (13) approves (33) or an agreement (36) is reached, notice to this effect is given to the repair shop (34) and, once the product is repaired, to the accounts department (37) of the lessor organization (11), for example, by means of an enterprise resource planning system (38). Finally, a workflow is started (39) for feeding the product into its second lifecycle (40), such as through e-commerce.

### Industrial applicability

The invention is applicable, inter alia, throughout the financial industry.

### Reference signs list

- 1: Initiation of payment
- 2: Authorization of payment
- 3: Settlement of amount
- 4: Disbursal of amount
- 5: Leasing bank
- 6: Merchant
- 7: Acquiring bank
- 8: Issuing bank
- 9: Processor
- 10: Purchasing
- 11: Lessor organization
- 12: Contract and issuance of card
- 13: Cardholder
- 14: Card reader
- 15: Provision of hardware and software
- 16: Money transfer
- 21: Lessor organization advises cardholder of terms of lease
- 22: Further action
- 23: Cardholder decides to buy or lease product
- 24: E-mail to lessor organization
- 25: Lessor organization charges cardholder full amount or retains leasing instalments
- 26: Return date agreement with cardholder
- 27: Return of leased product
- 28: Trustee
- 29: Redemption value calculation
- 30: Redemption value notified to cardholder
- 31: Cardholder decides to buy product
- 32: Lessor organization charges cardholder directly
- 33: Cardholder approves of redemption value
- 34: Notice to repair shop
- 35: Cardholder disapproves of redemption value
- 36: In-house arbitration body reaches agreement with cardholder
- 37: Notice to accounts department
- 38: Enterprise resource planning (ERP) system
- 39: Workflow start
- 40: Second lifecycle

### Citation list

The following documents are cited hereinbefore.

### Patent literature

PTL1: WO 2013/044286 A (CARDLINK SERVICES LTD [AU]; WILLIAMS RICHARD MARK [AU]; BROWN KEITH ROBERT GODING [AU]) 04.04.2013

### Non-patent literature

NPL1: WRIGHT, Julian. Pricing in debit and credit card schemes. Economics Letters. 2003, vol.80, no.3, p.305-309.

## Claims

1. Computer-implemented process for purchasing (10) a product by a holder (13) of a payment card,
comprising
initiation (1) of a payment of an agreed-upon monetary amount, such as by specification of a number, validity date, and verification number of the card vis-à-vis a merchant (6),
authorization (2) of the payment through an acquiring bank (7) of the merchant (6), and
settlement (3) of the amount, such as by money transfer (16), between the acquiring bank (7) and an issuing bank (8) of the card,
**characterized in**
disbursal (4) of the amount by a lessor organization (11) such as a leasing bank (5).

2. Process as per Claim 1
wherein
the card is issued by the issuing bank (8) to the holder (13) upon conclusion of a contract (12).

3. Process as per Claim 1 or Claim 2
wherein
a payment processor (9) provides hardware, such as a card reader (14), and software (15) for interconnecting the merchant (6) and acquiring bank (7).

4. Process as per any of the preceding claims
wherein,
upon the initiation (1) of the payment, the lessor organization (11) advises (21) the holder (13) of terms of a lease of the product and,
depending on the terms, the holder (13) decides upon further action (22).

5. Process as per Claim 4
wherein,
if the holder (13) decides to buy or lease the product (23), a pertinent e-mail (24) is transmitted to the lessor organization (11) and,
based on the e-mail (24), the lessor organization (11) charges the holder (13) the full amount or retains leasing instalments (25) for the product, respectively.

6. Process as per Claim 4 or Claim 5
wherein,
if the holder (13) decides for the lease, the lessor organization (11) enters into an agreement (26) on a date on which the product is to be returned (27) by the holder (13), such as by regular mail, express, or handover to the merchant.

7. Process as per Claim 6
wherein,
once returned (27), the product is consigned to a trustee (28) for inspection and, optionally, repair, refurbishment, or recycling.

8. Process as per Claim 7
wherein,
based upon the inspection, any redemption value of the product is calculated (29) and notified (30) to the holder (13).

9. Process as per Claim 8
wherein,
if the holder (13) decides to buy the product (31), the lessor organization (11) charges the holder (13) the redemption value.

10. Process as per Claim 8 or Claim 9
wherein,
if the holder (13) approves of the redemption value (33), notice is given to a repair shop (34).

11. Process as per Claim 10
wherein,
if the holder (13) disapproves of the redemption value (35), an in-house arbitration body of the lessor organization (11) reaches agreement (36) with the holder (13).

12. Process as per Claim 10 or Claim 11
wherein,
once the product is repaired, notice is given to an accounts department (37) of the lessor organization (11), for example, by means of an enterprise resource planning system (38), and a workflow is started (39) for feeding the product into a second lifecycle (40).

13. Data processing apparatus having means for carrying out the process as per any of the preceding claims.

14. Computer program comprising instructions which, when the program is carried out by a computer, cause the computer to carry out the method of any of Claim 1 through Claim 12.

15. Data carrier signal carrying the computer program of Claim 14.
